# FASCICULE DE BREVET EUROPEEN

(11) **EP 1 404 550 B1**
(45) Date de publication et mention de la délivrance du brevet: **01.08.2007**
(21) Numéro de dépôt: 02784839.9
(22) Date de dépôt: 05.07.2002
(51) Int. Cl.: B60R 25/00

(54) **DISPOSITIF D'IDENTIFICATION POUR VEHICULE AUTOMOBILE**
IDENTIFIKATIONSVORRICHTUNG FÜR EIN KRAFTFAHRZEUG
IDENTIFICATION DEVICE FOR MOTOR VEHICLE

(30) Priorité: 12.07.2001 FR 0109569
(43) Date de publication de la demande: 07.04.2004
(73) Titulaire: Valeo Sécurité Habitacle S.A.S., 94042 Créteil cedex (FR)
(72) Inventeur: BARBULESCU, Virgil, F-60650 Saint Aubin en Bray (FR)
(74) Mandataire: Rosolen-Delarue, Katell
(86) Numéro de dépôt international: PCT/EP2002/007500
(87) Numéro de publication internationale: WO 2003/006280

(56) Documents cités:
- EP-A- 0 570 761
- EP-A- 1 001 117
- FR-A- 2 785 703

## Description

La présente invention concerne un dispositif d'identification pour véhicule automobile, en particulier du type « mains-libres ».

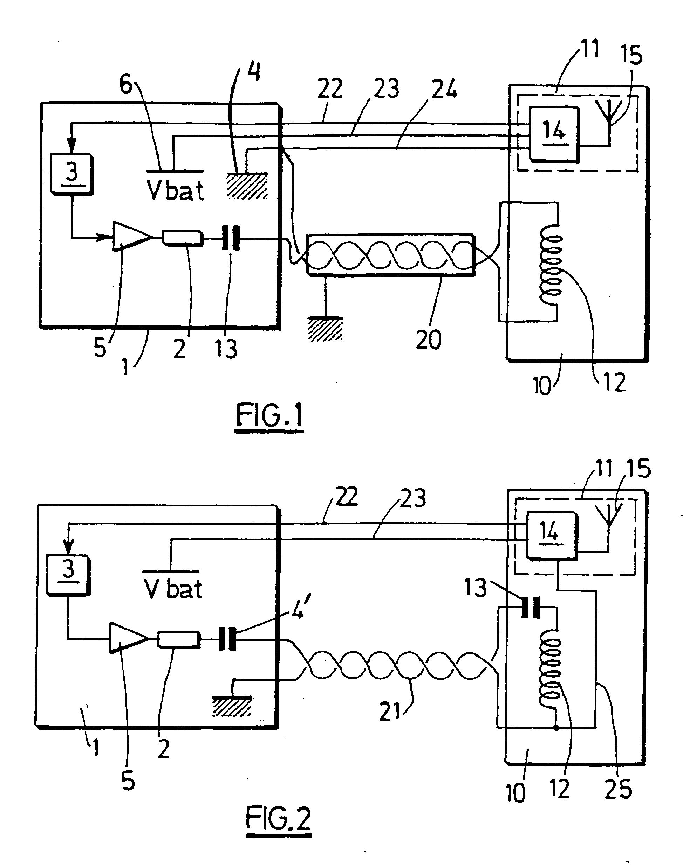

Afin de mieux illustrer l'invention de la Demanderesse, on a choisi de présenter un système d'identification connu et de présenter ses inconvénients. Ce système d'identification divulgue les caractéristiques du préambule de la revendication 1. La figure 1 représente un schéma simplifié de ce dispositif d'identification comportant d'une part, une console électrique centrale 1 disposée généralement dans l'espace habitacle du véhicule, et d'autre part, un module support 10 pour porter des composants électroniques 11 et 12 intervenant dans la communication de la console centrale 1 avec une unité d'identification non représentée telle qu'un badge, portée par un utilisateur. Le module support 10 est disposé au niveau d'une poignée ou du coffre du véhicule et sera décrit plus en détail ci-après.

Pour des raisons de clarté, un seul module support 10 avec ses composants électriques 11 et 12 a été représenté, mais il est bien entendu que chaque poignée du véhicule peut être équipée d'un tel module 10 qui est relié à l'unique console électrique centrale 1.

Comme on le voit sur la figure 1, la console centrale 1 et les composants électriques 11 et 12 sont reliés par des moyens de connexions 20,22,23,24 généralement plaqués contre les parois de l'habitacle du véhicule.

Classiquement, les composants électroniques 11 et 12, portés par le module support 10, sont constitués par un capteur d'approche 11 et une bobine d'émission/réception 12.

Un microcontrôleur 3, un étage amplificateur 5, une résistance 2, une capacité d'accord 13, une connexion 4 à la masse et une connexion 6 à la batterie sont agencés dans la console centrale 1.

Le microcontrôleur 3 génère des données d'identification et vérifie l'authenticité des données d'identification émises par le badge. Il sera ci-après nommé microcontrôleur de vérification.

La résistance 2, la capacité d'accord 13 et la bobine d'émission/réception 12 forment un circuit de résonance.

Classiquement, la résistance 2 et la capacité d'accord 13 du circuit sont agencées dans la console centrale 1. La bobine d'émission/réception est, quant à elle, disposée dans le module support 10 de manière à ce que son champ d'émission/réception soit localisé au niveau des poignées du véhicule.

La capacité 13 est usuellement appelée capacité d'accord, car sa valeur de capacitance est définie de sorte que la fréquence de résonance de la bobine d'émission/réception 12 soit égale à la fréquence de résonance de la bobine agencée dans le badge porté par l'utilisateur.

Cette capacité d'accord 13 permet d'obtenir un bon facteur de qualité du circuit de résonance de manière à augmenter la portée d'émission/réception de la bobine 12.

La capacité d'accord a une capacitance d'une dizaine de nano-Farads de sorte que la tension à ses bornes est élevée à la fréquence de travail, souvent de l'ordre d'une centaine de Volts.

Etant donné la forte tension transportée par la liaison électrique entre la console 1 et le module 10, et la longueur de celle-ci, un rayonnement parasite est induit qui perturbe le champ émis par la bobine 12 et les autres organes du véhicule.

Par ailleurs, la fréquence de résonance du badge et de la bobine d'émission/réception 12 doivent correspondre pour que le badge puisse réceptionner les données envoyées par la bobine 12. Or, la liaison électrique 20 induit une capacité supplémentaire, parasite, qui modifie la fréquence de fonctionnement de la bobine 12. De plus, cette capacité parasite a une capacitance qui varie en fonction de la géométrie du véhicule, et qui est donc difficilement maîtrisable.

Pour pouvoir remédier à ces inconvénients, il est connu de réaliser la liaison entre le module support 10 et la console centrale 1 par un câble 20 de type torsadé et blindé .

Cependant, ce type de câble 20 est encombrant, ce qui est désavantageux dans l'espace réduit de montage de la porte. Or, dans un véhicule, de nombreuses fonctions sont réalisées par des actionneurs électriques, et les conduits de fil électrique ont un diamètre restreint afin de préserver l'espace habitacle.

De plus, le coût d'un câble 20 de type torsadé et blindé est très élevé par rapport au coût d'un câble torsadé simple.

Un but de la présente invention est de réaliser un dispositif d'identification comportant entre la console centrale 1 et le module support 10, des liaisons électriques de faible diamètre, en nombre réduit et à faible coût.

A cet effet, l'invention a pour objet un dispositif d'identification tel que défini dans la revendication 1.

Le dispositif selon l'invention peut présenter en outre une ou plusieurs des caractéristiques suivantes :
- le circuit de résonance comporte une capacité d'ajustement agencée au niveau de la console centrale pour ajuster finement la fréquence de résonance du circuit de résonance, en fonction de la géométrie de chaque type de véhicule ;
- la console centrale comporte un microcontrôleur de vérification des données d'identification et le module support comporte un capteur d'approche et un étage amplificateur reliés au circuit de résonance, le capteur d'approche comportant au moins une électrode et un microcontrôleur de traitement et d'envoi au microcontrôleur de vérification d'un signal d'enclenchement, ledit microcontrôleur de traitement et d'envoi étant relié au microcontrôleur de vérification de manière à gérer également l'envoi des données d'identification par multiplexage sur une liaison série commune pour limiter le nombre de liaisons entre le module support et la console centrale ;
- la console centrale comporte un microcontrôleur de vérification des données d'identification et le module support comporte un microcontrôleur supplémentaire, un étage amplificateur et le circuit de résonance reliés en série, ledit microcontrôleur supplémentaire étant relié au microcontrôleur de vérification de manière à gérer l'envoi des données d'identification par multiplexage sur une liaison série commune pour limiter le nombre de liaisons entre le module support et la console centrale.
- le dispositif comporte au moins un moyen de commande de la fermeture d'un ouvrant de véhicule, ledit moyen de commande étant agencé sur le module support, le moyen de commande comportant au moins une électrode et ledit microcontrôleur de traitement et d'envoi qui traite et envoie un signal de commande de verrouillage de l'ouvrant ;
- le microcontrôleur de traitement et d'envoi d'un signal d'enclenchement est relié à l'électrode de manière à gérer également l'envoi dudit signal de commande de verrouillage, par multiplexage, sur la liaison série commune pour limiter le nombre de liaisons de connexion entre le module support et la console centrale ;
- le moyen de commande de la fermeture est un capteur tactile ;
- le moyen de commande de la fermeture comporte un interrupteur à actionnement manuel ;
- le module support et la console centrale sont reliés par une seule liaison de masse servant de liaison de masse pour chacun des composants électroniques portés par le module de manière à limiter le nombre de liaisons entre le module support et la console centrale ;
- le module support et la console centrale sont reliés par une seule liaison d'alimentation servant de liaison d'alimentation pour chacun des composants électroniques portés par le module support de manière à limiter le nombre de liaisons entre le module support et la console centrale.

L'invention sera mieux comprise au cours de la description explicative détaillée qui va suivre en référence aux figures annexées sur lesquelles :
- la figure 1 représente une vue schématique d'un dispositif d'identification selon l'art antérieur (décrit dans le préambule),
- la figure 2 représente une vue schématique d'un dispositif d'identification selon un premier mode de réalisation,
- la figure 3 représente une vue schématique d'un dispositif d'identification selon un second mode de réalisation.

La figure 2 représente un dispositif d'identification selon un premier mode de réalisation de la présente invention. Les éléments identiques aux éléments représentés en Figure 1 portent les mêmes numéros.

Cependant, selon la présente invention, la capacité d'accord 13 n'est plus disposée dans la console centrale 1 mais est déportée sur le module support 10.

En conséquence, la tension acheminée par la liaison électrique 21 est de l'ordre d'une dizaine de Volts. Ainsi, la tension est faible sur la liaison électrique 21 entre la console centrale 1 et le module support 10, de sorte que celle-ci génère beaucoup moins de rayonnement parasite.

La tension est forte uniquement sur la liaison entre la capacité d'accord 13 et la bobine 12. Or, la capacité d'accord 13 et la bobine 12 sont juxtaposées sur la carte électronique du module support de sorte que le champ généré est négligeable.

En conséquence, grâce à la présente invention, il est possible d'utiliser un fil torsadé 21 non blindé et peu cher qui relie la console centrale 1 et le module support 10 d'où un gain en terme de coût et d'espace sur les liaisons électriques du véhicule.

Avantageusement, une capacité d'ajustement 4' d'une valeur d'environ quelques dizaines de pico-farads est disposée en aval de la résistance 2. Cette capacité d'ajustement 4' permet d'ajuster finement la valeur de la fréquence de résonance, en fonction de la géométrie du véhicule sur lequel le dispositif d'identification est installé. En effet, le champ magnétique émis est perturbé par le métal de la carrosserie ou de la poignée du véhicule, et il varie notamment en fonction de la quantité et de la proximité de celui-ci.

Cette capacité d'ajustement a une capacitance faible de sorte que la tension à sa sortie reste de l'ordre d'une dizaine de Volts. Ainsi, malgré la présence de cette capacité d'ajustement 4', le fil torsadé 21 ne nécessite pas d'être blindé.

En conséquence, le montage du dispositif d'identification est facilité car le réglage de la fréquence de résonance est réalisé une seule fois au niveau de la console centrale pour l'ensemble des ouvrants.

De plus, un dispositif d'identification donné peut être monté facilement sur différents types de véhicule. La fréquence de fonctionnement du dispositif est ajustée pour chaque type de véhicule en fonction de sa géométrie et de la fréquence de résonance désirée. Ainsi, grâce à l'utilisation de cette capacité d'ajustement 4' a standardisation des dispositifs d'identification est considérablement augmentée.

En outre, la capacité d'ajustements 4' a un rôle de protection contre les courts-circuits.

Par ailleurs, comme visible sur la figure 1, le capteur d'approche 11, disposé dans le module support, est constitué par une ou plusieurs électrodes 15 et un microcontrôleur 14 de traitement et d'envoi d'un signal de déclenchement.

Ce microcontrôleur de traitement 14 est relié à la console centrale 1 par trois liaisons électriques: une liaison 24 à la masse 4, une liaison 23 à l'alimentation 6 et une liaison 22 de transmission d'un signal de déclenchement vers le microcontrôleur de vérification 3 des données d'identification.

Avantageusement, selon la présente invention, la masse du microcontrôleur de traitement 14 est reliée par un fil 25 à la liaison à la masse du fil torsadé 21. Ainsi, le capteur d'approche 11 et la bobine d'émission/réception 12 utilisent la même liaison à la masse de sorte que le nombre de liaisons entre la console centrale 1 et le module support 10 est diminué.

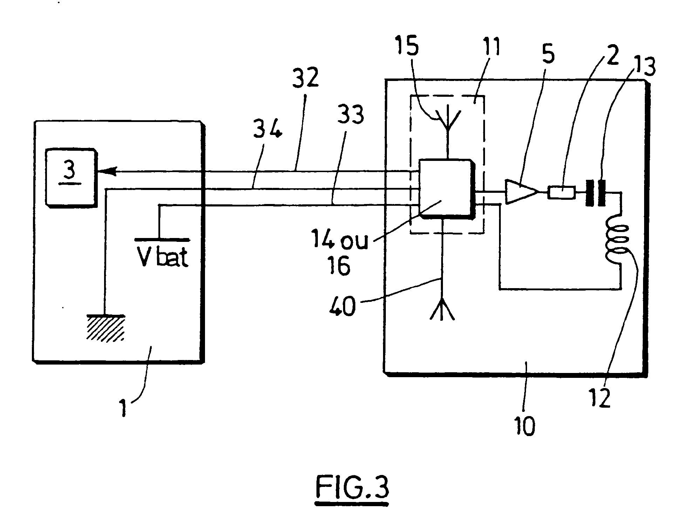

Un second mode de réalisation de la présente invention est représenté sur la figure 3. Selon ce mode de réalisation, l'étage amplificateur 5 et la résistance 2 ont été agencés dans le module support 10, en série avec la capacité d'accord 13 et la bobine d'émission/réception 12.

De plus, un microcontrôleur supplémentaire 16 gère le traitement et l'envoi et/ou la réception des données d'identification émises, et/ou réceptionnées par la bobine 12.

En conséquence, la liaison électrique 21 de transmission des données d'identification entre la console 1 et le module support 10 est supprimée, d'où un gain d'espace et de coût.

De plus, la liaison de transmission des données 32 reliant le microcontrôleur supplémentaire 16 au microcontrôleur de vérification 3, ne délivre pas de signal alternatif. Elle n'a donc pas besoin d'être une liaison de type torsadé. Ainsi, un nouveau gain d'espace et de coût est réalisé.

Dans ce cas, le microcontrôleur supplémentaire 16 gère la transmission des données d'identification. Cependant, on peut également prévoir que le microcontrôleur supplémentaire 16 génère les données d'identification et les transmet à la fois à l'étage amplificateur 5 et au microcontrôleur de vérification 3. Dans ce cas, les données d'identification émises par le badge sont tout de même authentifiées par le microcontrôleur de vérification 3 qui donne l'autorisation de déverrouillage de l'ouvrant.

Selon une variante, le microcontrôleur de traitement 14 du capteur d'approche remplace le microcontrôleur supplémentaire.

Ainsi, avantageusement selon cette variante, le microcontrôleur de traitement 14 traite le signal de déclenchement et gère en simultané, par multiplexage, l'envoi et/ou la réception du signal de déclenchement et des données d'identification sur une unique liaison de transmission 32.

De manière avantageuse, le module support 10 comporte également un moyen de commande de la fermeture d'un ouvrant tel qu'un capteur tactile ou un interrupteur à actionnement manuel.

Un capteur tactile est généralement constitué par une électrode 40 et un microcontrôleur de traitement et d'envoi d'un signal de verrouillage de l'ouvrant.

Avantageusement, selon la présente invention, le microcontrôleur de traitement 14 du capteur d'approche 11 gère également le traitement et l'envoi, et/ou la réception d'un signal de verrouillage sur la liaison de transmission 32.

De plus, selon la présente invention, une liaison d'alimentation 33 relie la console centrale 1 au microcontrôleur de traitement 14. Cette liaison d'alimentation 33 alimente le moyen de commande de fermeture ainsi que le capteur d'approche 11.

Avantageusement également, une liaison de masse 34 relie la console centrale 1 au microcontrôleur de traitement 14. Cette liaison de masse 34 sert de liaison de masse à la bobine d'émission/réception 12, au capteur d'approche 11 et au moyen de commande de la fermeture.

Ainsi, une unique liaison d'alimentation 33, une unique liaison de masse 34 et une unique liaison 32 de transmission des données relient la console centrale 1 et chaque module support 10.

Les connexions à la masse et à la batterie peuvent également provenir d'un faisceau électrique du véhicule et relier chacun des composants électroniques du véhicule individuellement. Dans ce cas, les variantes ci-dessus décrites de la présente invention sont également réalisables.

En conséquence, grâce à la présente invention, l'encombrement des liaisons électriques est considérablement réduit.

De plus, le nombre de connexions électriques est réduit, ce qui augmente la fiabilité du dispositif d'identification car les connexions électriques sont souvent source de panne.

En outre, le module support peut être monté facilement avec un confort maximum pour l'utilisateur.

## Revendications

1. Dispositif d'identification pour un véhicule automobile comportant une unité d'identification portée par l'utilisateur, une console centrale (1) embarquée sur le véhicule pour la vérification des données d'identification de l'utilisateur via une communication par ondes électromagnétiques, par l'intermédiaire d'un circuit de résonance (2, 12,13) présentant au moins une capacité d'accord (13) et au moins une bobine d'émission/réception (12) des données d'identification, et au moins un module support (10) disposé sur le véhicule au niveau d'un ouvrant du véhicule et comprenant ladite bobine d'émission/réception (12), le module support (10) et la console centrale (1) étant distants l'un de l'autre et reliés entre eux par des moyens de connexion électrique (20-24 ; 32-34),
**caractérisé en ce que** ladite capacité d'accord (13) du circuit de résonance est agencée avec ladite bobine d'émission/réception (12) sur ledit module support (10) pour limiter le rayonnement parasite du circuit de résonance.

2. Dispositif d'identification selon la revendication 1, **caractérisé en ce que** le circuit de résonance comporte une capacité d'ajustement (4'), agencée au niveau de la console centrale (1), pour ajuster finement la fréquence de résonance du circuit de résonance en fonction de la géométrie de chaque type de véhicule.

3. Dispositif d'identification selon la revendication 1 ou 2, **caractérisé en ce que** la console centrale (1) comporte un microcontrôleur de vérification (3) des données d'identification, et **en ce que** le module support (10) comporte un microcontrôleur supplémentaire (16), un étage amplificateur (5) et le circuit de résonance (2, 12, 13) reliés en série, ledit microcontrôleur supplémentaire (16) étant relié au microcontrôleur de vérification (3), de manière à gérer l'envoi des données d'identification par multiplexage sur une liaison série commune (32) pour limiter le nombre de liaisons entre le module support (10) et la console centrale (1).

4. Dispositif d'identification selon la revendication 1 ou 2, **caractérisé en ce que** la console centrale (1) comporte un microcontrôleur de vérification (3) des données d'identification, et **en ce que** le module support (10) comporte un capteur d'approche (11) et un étage amplificateur (5) reliés au circuit de résonance (2, 12, 13), le capteur d'approche (11) comportant au moins une électrode (15) et un microcontrôleur de traitement et d'envoi (14) au microcontrôleur de vérification (3) d'un signal d'enclenchement, ledit microcontrôleur de traitement (14) étant relié au microcontrôleur de vérification (3) de manière à gérer également l'envoi des données d'identification par multiplexage sur une liaison série commune (32) pour limiter le nombre de liaisons entre le module support (10) et la console centrale (1).

5. Dispositif d'identification selon la revendication 4, **caractérisé en qu'**il comporte au moins un moyen de commande (14, 40) de la fermeture d'un ouvrant de véhicule ledit moyen de commande (14,40) étant agencé sur le module support (10), le moyen de commande comportant au moins une électrode (40) et ledit microcontrôleur de traitement et d'envoi (14) qui traite et envoie un signal de commande de verrouillage de l'ouvrant.

6. Dispositif selon la revendication 5, **caractérisé en ce que** le microcontrôleur de traitement et d'envoi (14) d'un signal d'enclenchement est relié à l'électrode (40) de manière à gérer également l'envoi dudit signal de commande de verrouillage, par multiplexage, sur la liaison série commune (32) pour limiter le nombre de liaisons de connexion entre le module support (10) et la console centrale (1).

7. Dispositif selon la revendication 5 ou 6, **caractérisé en ce que** le moyen de commande de la fermeture (40, 14) est un capteur tactile.

8. Dispositif selon la revendication 5 ou 6, **caractérisé en ce que** le moyen de commande de la fermeture (40,14) comporte un interrupteur à actionnement manuel.

9. Dispositif selon l'une des revendication 3 à 5, **caractérisé en que** le module support (10) et la console centrale (1) sont reliés par une seule liaison de masse (34) servant de liaison de masse pour chacun des composants électroniques (40, 12, 11) portés par le module (10) de manière à limiter le nombre de liaisons entre le module support (10) et la console centrale (1).

10. Dispositif selon la revendications 5, **caractérisé en ce que** le module support (10) et la console centrale (1) sont reliés par une seule liaison d'alimentation (33) servant de liaison d'alimentation pour chacun des composants électroniques (40, 11) portés par le module support (10) de manière à limiter le nombre de liaisons entre le module support (10) et la console centrale (1).

## Claims

1. Identification device for a motor vehicle comprising an identification unit worn by the user, a central onboard console (1) for verifying the user's identification data via an electromagnetic wave communication, through a resonant circuit (2, 12, 13) having at least a tuning capacitor (13) and at least one identification data transmitter/receiver coil (12) and at least one support module (10) arranged at a vehicle door and comprising said transmitter/receiver coil (12), whereby support module (10) and central console (1) are spaced apart from each other and connected by electrical connection means (20-24; 32-34); **characterised in that** said tuning capacitor (13) of the resonant circuit is arranged with said transmitter/receiver coil (12) on said support module (10) in order to limit stray radiation from the resonant circuit.

2. Identification device as claimed in claim 1, **characterised in that** the resonant circuit includes an adjustment capacitor (4'), fitted to central console (1), to fine-tune the resonant frequency of the resonant circuit according to the geometry of each vehicle type.

3. Identification device as claimed in claim 1 or 2, **characterised in that** central console (1) includes a microcontroller (3) for verifying identification data, and **in that** support module (10) includes an additional microcontroller (16), an amplifying stage (5) and the resonant circuit (2, 12, 13) connected in series, and said additional microcontroller (16) is connected to the verifying microcontroller (3), such as to manage identification data transmission by multiplexing with a common series connection (32) in order to limit the number of connections between support module (10) and central console (1).

4. Identification device as claimed in claim 1 or 2, **characterised in that** central console (1) includes a microcontroller (3) for verifying the identification data, and **in that** support module (10) includes a proximity sensor (11) and an amplifying stage (5) connected to resonant circuit (2, 12, 13), whereby proximity sensor (11) includes at least one electrode (15) and one microcontroller (14) for processing and transmitting a trigger signal to verifying microcontroller (3), and where said processing and transmission microcontroller (14) is connected to verifying microcontroller (3) such as to also manage identification data transmission by multiplexing over a common series connection (32) in order to limit the number of connections between support module (10) and central console (1).

5. Identification device as claimed in claim 4, **characterised in that** it includes at least one means (14, 40) for controlling the locking system of a vehicle door, whereby said control means (14, 40) is fitted to support module (10) and where the control module includes at least one electrode (40) and said processing and transmission microcontroller (14), which processes and transmits a door locking command signal.

6. Device as claimed in claim 5, **characterised in that** the microcontroller (14) which processes and transmits a trigger signal is connected to electrode (40) such as also to manage transmission of said locking command signal, by multiplexing on the common series connection (32) in order to limit the number of connections between support module (10) and central console (1).

7. Device as claimed in claim 5 or 6, **characterised in that** the locking command means (40, 14) is a touch sensor.

8. Device as claimed in claim 5 or 6, **characterised in that** locking command means (40, 14) includes a manually actionned switch.

9. Device as claimed in any of claims 3 to 5, **characterised in that** support module (10) and central console (1) are connected by a single ground connection (34) which serves as the ground connection for all the electronic components (40, 12, 11) supported by module (10) such as to limit the number of connections between support module (10) and central console (1).

10. Device as claimed in claim 5, **characterised in that** support module (10) and central console (1) are connected by a single power supply connection (33), which serves as power supply connection for all electronic components (40, 11) supported by support module (10), such as to limit the number of connections between support module (10) and central console (1).

## Patentansprüche

1. Identifikationsvorrichtung für ein Kraftfahrzeug mit einer vom Benutzer mitgeführten Identifikationseinheit, einer im Fahrzeug installierten Zentralkonsole (1) zum Überprüfen der Identifikationsdaten des Benutzers über eine Verbindung durch elektromagnetische Wellen mittels eines Resonanzkreises (2, 12, 13), der zumindest eine Abstimmkapazität und zumindest eine Sende-/Empfangsspule (12) für die Identifikationsdaten aufweist, sowie mit zumindest einem Unterstützungsmodul (10), das am Fahrzeug im Bereich einer Fahrzeugtür angeordnet ist und die Sende-/Empfangsspule (12) enthält, wobei das Unterstützungsmodul (10) und die Zentralkonsole (1) voneinander beabstandet und über elektrische Verbindungsmittel (20-24; 32-34) miteinander verbunden sind, **dadurch gekennzeichnet, dass** die Abstimmkapazität (13) des Resonanzkreises mit der Sende-/Empfangsspule (12) am Unterstützungsmodul (10) angeordnet ist, um die Störstrahlung des Resonanzkreises zu begrenzen.

2. Identifikationsvorrichtung nach Anspruch 1, **dadurch gekennzeichnet, dass** der Resonanzkreis eine Einstellkapazität (4) enthält, die im Bereich der Zentralkonsole (1) angeordnet ist, um die Resonanzfrequenz des Resonanzkreises in Abhängigkeit von der Geometrie eines jeden Fahrzeugtyps fein einzustellen.

3. Identifikationsvorrichtung nach Anspruch 1 oder 2, **dadurch gekennzeichnet, dass** die Zentralkonsole (1) einen Mikrokontroller (3) zum Überprüfen der Identifikationsdaten enthält und dass das Unterstützungsmodul (10) einen zusätzlichen Mikrokontroller (16), eine Verstärkerstufe (5) und einen Resonanzkreis (2, 12, 13) enthält, die in Reihe verbunden sind, wobei der zusätzliche Mikrokontroller (16) mit dem Überprüfungsmikrokontroller (3) so verbunden ist, dass das Übertragen von Identifikationsdaten durch Multiplex auf einer gemeinsamen seriellen Verbindung (32) erfolgt, um die Anzahl von Verbindungen zwischen dem Unterstützungsmodul (10) und der Zentralkonsole (1) zu begrenzen.

4. Identifikationsvorrichtung nach Anspruch 1 oder 2, **dadurch gekennzeichnet, dass** die Zentralkonsole (1) einen Mikrokontroller (3) zum Überprüfen der Identifikationsdaten enthält und dass das Unterstützungsmodul (10) einen Annäherungssensor (11) und eine Verstärkerstufe (5) enthält, die mit dem Resonanzkreis (2, 12, 13) verbunden sind, wobei der Annäherungssensor (11) zumindest eine Elektrode (15) und einen Mikrokontroller (14) zum Verarbeiten und Übertragen eines Auslösesignals an den Überprüfungsmikrokontroller (3) enthält, wobei der Verarbeitungs- und Übertragungsmikrokontroller (14) mit dem Überprüfungsmikrokontroller (3) so verbunden ist, dass auch das Übertragen von Identifikationsdaten durch Multiplex auf einer gemeinsamen seriellen Verbindung (32) erfolgt, um die Anzahl von Verbindungen zwischen dem Unterstützungsmodul (10) und der Zentralkonsole (1) zu begrenzen.

5. Identifikationsvorrichtung nach Anspruch 4, **dadurch gekennzeichnet, dass** sie zumindest ein Mittel (14, 40) zum Steuern des Schließvorgangs einer Fahrzeugtür enthält, wobei das Steuermittel (14, 40) am Unterstützungsmodul (10) angeordnet ist und wobei das Steuermittel zumindest eine Elektrode (40) und den Verarbeitungs- und Übertragungsmikrokontroller (14) enthält, welcher ein Signal zum Steuern der Verriegelung der Tür verarbeitet und überträgt.

6. Identifikationsvorrichtung nach Anspruch 5, **dadurch gekennzeichnet, dass** der Mikrokontroller (14) zum Verarbeiten und Übertragen eines Auslösesignals mit der Elektrode (40) so verbunden ist, das auch das Übertragen des Verriegelungssteuersignals durch Multiplex auf der gemeinsamen seriellen Verbindung (32) erfolgt, um die Anzahl von Anschlussverbindungen zwischen dem Unterstützungsmodul (10) und der Zentralkonsole (1) zu begrenzen.

7. Identifikationsvorrichtung nach Anspruch 5 oder 6, **dadurch gekennzeichnet, dass** das Schließsteuermittel (40, 14) ein Tastsensor ist.

8. Identifikationsvorrichtung nach Anspruch 5 oder 6, **dadurch gekennzeichnet, dass** das Schließsteuermittel (40, 14) einen manuell betätigbaren Schalter enthält.

9. Identifikationsvorrichtung nach einem der Ansprüche 3 bis 5, **dadurch gekennzeichnet, dass** das Unterstützungsmodul (10) und die Zentralkonsole (1) über eine einzige Masseverbindung (34) verbunden sind, die als Masseverbindung für jedes der von dem Modul (10) getragenen elektronischen Bauteile (40, 12, 11) dient, so dass die Anzahl von Verbindungen zwischen dem Unterstützungsmodul (10) und der Zentralkonsole (1) begrenzt wird.

10. Identifikationsvorrichtung nach Anspruch 5, **dadurch gekennzeichnet, dass** das Unterstützungsmodul (10) und die Zentralkonsole (1) über eine einzige Versorgungsverbindung (33) verbunden sind, die als Versorgungsverbindung für jedes der von dem Modul (10) getragenen elektronischen Bauteile (40, 11) dient, so dass die Anzahl von Verbindungen zwischen dem Unterstützungsmodul (10) und der Zentralkonsole (1) begrenzt wird.
